(19) Europäisches Patentamt
European Patent Office
Office européen des brevets

(11) **EP 1 890 032 A2**

(12) **EUROPÄISCHE PATENTANMELDUNG**

(43) Veröffentlichungstag:
**20.02.2008 Patentblatt 2008/08**

(51) Int Cl.:
*F03B 13/14* *(2006.01)*

(21) Anmeldenummer: **07090127.7**

(22) Anmeldetag: **31.07.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **16.08.2006 DE 102006039144**

(71) Anmelder: **Lodhal, Manfred**
**12205 Berlin (DE)**

(72) Erfinder: **Lodhal, Manfred**
**12205 Berlin (DE)**

(54) **Schwimmender Wellenenergiekonverter mit Verfahren zur Positionierung**

(57) Bekannte schwimmende Wellenenergiekonverter sind nicht geeignet, die Wellenenergie in Meeresbereichen großer Tiefe im MW-Leistungsbereich effizient nutzbar zu machen. Der neue schwimmende Wellenenergiekonverter soll hingegen für diese Meeresbereiche geeignet sein und im MW-Leistungsbereich effizient eingesetzt werden können. Darüber hinaus soll er eine wirtschaftliche Lösung für den Energietransport ermöglichen.

Der schwimmende Wellenenergiekonverter (1) kann aufgrund spezieller Wellenführungskanäle (2), einer speziellen Konstruktion von Speicherbecken (3) und auf Pfeilern (35) ruhenden Aufbauten, einer Flut- und Lenzeinrichtung für große Hübe und seinen Ankerplatten (17) und Antrieben (16) in Gebieten großer Meerestiefen eingesetzt werden und dort mit seinem Turbinen-Generatorsystem (6, 10) im MW-Leistungsbereich elektrische Energie generieren. Ein Wellenmanagement- und Positionierungssystem sorgt für eine effiziente Energiegewinnung durch eine optimale Positionierung des schwimmenden Wellenenergiekonverters (1) nach Richtung, Höhe und Lage. Mit der gewonnenen elektrischen Energie werden mittels Elektrolyse Wasserstoff und Sauerstoff gewonnen. Wasserstoff und Sauerstoff werden in Gastanks (33) gespeichert und transportiert.

Der schwimmende Wellenenergiekonverter (1) ist dort einsetzbar, wo die Energie der Meereswellen am größten ist, nämlich im Bereich großer Meerestiefen. Durch den Transport der Energie in Form von erzeugtem Wasserstoff und Sauerstoff gibt es keine örtlichen Restriktionen für seinen Einsatz, wie sie bei der Verwendung von Seekabeln gegeben sind.

FIG.6

EP 1 890 032 A2

**Beschreibung**

Die Erfindung bezieht sich auf das Gebiet der Wellenkraftanlagen, bei denen die Energie der Meereswellen in elektrische Energie umgeformt wird.

Zur Gewinnung von elektrischer Energie unter Ausnutzung der Energie von Meereswellen gibt es Vorschläge und Ausführungsbeispiele, die sich auf den Küsten-, den Offshore- und den Meeresbereich beziehen bzw. dort bereits realisiert wurden. Während es sich im Meeresbereich um schwimmende Einrichtungen handelt, ist dies im Offshore-Bereich nur teilweise gegeben.

Das wohl bekannteste Verfahren zur Gewinnung elektrischer Energie aus Meereswellen arbeitet nach dem OWC-Prinzip (Oscillating-Water-Column). In der DE 2857156 A1 wird dieses Verfahren angewendet. Hier bewirken die Wellen in einer nur teilweise ins Meer getauchten, nach unten hin offenen Kammer ein ständiges Anheben und Absenken des Wasserspiegels in der Kammer. Ein dadurch entstehender oszillierenden Luftstrom treibt eine Luftturbine mit angekoppeltem Generator an. Die Kammer ist mit dem Untergrund fest verbunden oder mittels am Boden verankerter Haltevorrichtungen an einer Bewegung in senkrechter Richtung gehindert.

Ein interessanter Vorschlag zur Energiegewinnung aus Meereswellen wurde auf der norwegischen Insel Toftestallen verwirklicht. Hier wurde 1986 ein Tapchan-Wellenenergie Kraftwerk (tapered channel) für eine maximale Leistung von 350 kW und einer Jahresenergie von 2 GWh errichtet, das als Prototyp-Anlage diente. Diese Werte wurden im Betrieb auch erreicht. Unter Ausnutzung der für dieses Projekt günstigen topographischen Gegebenheiten laufen die Wellen in einen sich stark verengenden und ansteigenden Kanal ein. Aufgrund dieser Verhältnisse steilen sich die Wellen auf und Wasser spült über die Kanalwände in ein über dem Meereswasserspiegel liegendes Speicherbecken. Über eine Niederdruckwasserturbine mit angekoppeltem Generator fließt das Wasser aus diesem Speicherbecken zurück ins Meer.

In der DE 3803570 C2 wird eine schwimmende, im Offshore-Bereich verankerbare Windkonvertereinheit mit Wellenschutz und Wellenenergiegewinnung angegeben. Diese Windkonvertereinheit ist aus mehreren einzelnen, auf Schwimmkörpern positionierten Windenergiekonvertern zusammengesetzt. Um diese vor starkem Seegang zu schützen und die Energieausnutzung zu verbessern, sind den Windenergiekonvertern schwimmende und verankerbare, als Wellenenergiekonverter ausgebildete Vorrichtungen zum Schutz gegen Seegang und Sturmwellen und zur Wellenenergieumwandlung vorgelagert. Hierzu sind bei den Wellenenergiekonvertern Wellenführungskanäle vorgesehen, die sich wie bei der Tapchan-Anlage stark verengen und hinten überdacht und abgeschlossen sind. Auch hier spült das Wasser der aufgesteilten Wellen über die Begrenzungsseiten der Wellenführungskanäle, wird in einem Reservoir gesammelt und dann einem Turbinen-Generatorsystem zugeführt. Die schwimmenden Vorrichtungen sind über Ankerketten an Fundamente befestigt. Flut- und Lenzeinrichtungen gestatten ein Absenken oder Anheben der schwimmenden Einrichtungen.

Die OWC-Anlagen haben keinen sehr hohen Wirkungsgrad. Darüber hinaus sind die Anlagen im Küstenbereich der zerstörerischen Kraft der Brandungswellen ausgesetzt und werden daher häufig beschädigt oder gar zerstört.

Das Prinzip der Energiegewinnung aus Meereswellen bei der Tapchan-Anlage ist gut. Es leidet allerdings darunter, dass ein Küstenstreifen hierfür in Anspruch genommen werden muss und dieser darüber hinaus noch bestimmten topographischen und geologischen Erfordernissen genügen muss. Die Küstennähe bedeutet auch, dass bei stürmischer See enorme Brandungswellen entstehen können, die eine Gefahr für die Anlage darstellen. Da die Anlage in ihrer Konfiguration nicht veränderbar ist, kann sie auch nicht den sich ändernden Eigenschaften der Meereswellen, wie Wellenrichtung, Wellenhöhe und Periodendauer der Wellen angepasst werden. Darüber hinaus können derartige ortsgebundene Anlagen nicht wie gewöhnliche technische Produkte in großer Serie produziert werden, sondern müssen für jeden Anwendungsfall individuell konzipiert und am Ort erstellt werden. Darüber hinaus haben die Wellen in Ufernähe schon einen Teil ihrer Energie durch Reibung am Boden und durch Aufschäumung verloren.

Die in der DE 3803570 C2 angegebene schwimmende, im Offshore-Bereich verankerbare Vorrichtung zum Schutz von Windenergiekonvertern gegen Seegang und Sturmwellen und zur Wellenenergieumwandlung dient in erster Linie dem Schutz von Windenergiekonvertereinheiten und erst in zweiter Linie der Energiegewinnung. Sie ist daher unmittelbar vor den Windenergiekonvertern verankert. Die gewonnene elektrische Energie wird über Seekabel, Frequenzumwandler und Regeltrafos, die für die Windenergiekonverter ohnehin vorgesehen sind, den öffentlichen Verteilungsnetzen zugeführt. Gegenüber der Tapchan-Anlage hat dieser Wellenenergiekonverter den Vorteil, dass durch die vorgesehene Flut- und Lenzeinrichtung die Höhenlage der Kanalwandoberkanten und des Auffangbeckens den jeweiligen Wellenverhältnissen angepasst werden kann.

Dieser Wellenenergiekonverter ist konzeptionell allerdings nicht geeignet für den Einsatz in Meeresbereichen, wo die größtmögliche Energiegewinnung aus Meereswellen möglich ist, nämlich fern der Küsten und dort, wo die Meereswellen am größten sind. Außerdem würde die Notwendigkeit von Seekabeln für den Energietransport über große Strecken zu einer unwirtschaftlichen Lösung führen.

Vorrichtungen zur Energiegewinnung aus der Energie von Meereswellen großer Leistung und hohem Wirkungsgrad, die fern der Küsten in Gebieten mit großer Wassertiefe eingesetzt werden können, sind nicht bekannt. Aber gerade in diesen Gebieten haben die Wellen die größte Energie. Die bekannten Anlagen zur Energiegewinnung aus Meereswellen, die für einen Einsatz auf hoher See geeignet wären, sind in der Regel Anlagen kleiner Leistung. Daraus folgt zwangsläufig, dass sie nicht in der Lage sind, ökonomisch vertretbar, Energie in großen Mengen zu generieren.

Für den Energietransport von auf schwimmenden Vorrichtungen gewonnener elektrischer Energie wird in der Regel vorgeschlagen, dies mittels Seekabel durchzuführen. Dieses ist aber im Hinblick der hohen Kosten für diese Kabel und deren Verlegung nur sinnvoll, wenn die Entfernung zum Aufnahmepunkt der elektrischen Energie auf dem Land nicht weit entfernt ist von der schwimmenden Vorrichtung.

Die spezifische Leistung (P / b) der Meereswellen pro Meter Wellenfront (b) ist proportional der Wellenperiode (T) und dem Quadrat der Wellenhöhe (H). Die Wellenhöhe H ist dabei als Abstand von Wellental zu Wellenberg definiert und somit 2 h, wenn h die Wellenamplitude ist. Für die spezifische Leistung der Meereswellen pro Meter Wellenfront wird in der Literatur häufig folgende Formel benutzt:

$$P / b = (\rho \cdot g^2 / 32 \cdot \pi) \cdot H^2 \cdot T \quad kW/m$$

$\rho$ ist die Dichte des Wassers und ist $\rho$ = 1050 kg/m$^3$.

Die Dimensionen in der Gleichung sind Kilogramm (kg), Meter (m) und Sekunde (s).

Damit ergibt sich die spezifische Leistung der Meereswellen angenähert zu:

$$\underline{P / b = H^2 \cdot T \quad kW/m}$$

oder mit der für Schwerewellen anwendbaren Formel für die Geschwindigkeit v der Wellen
$v = (g \cdot \lambda/2\pi)^{1/2}$ und der Beziehung $v = \lambda \cdot f$, wobei $\lambda$ die Wellenlänge ist,

$$\underline{P / b = 0{,}805 \, H^2 \cdot \lambda^{1/2} \quad kW/m.}$$

Abgesehen von dem Energieverlust bei den Wasserwellen aufgrund der topographischen Verhältnisse in Küstennähe, gibt es grundsätzlich einen Energieverlust bei den Wellen durch Reibung am Meeresboden, wenn der Abstand des Meeresspiegels zum Meeresboden zu gering ist. Daher ist es für einen effizienten Einsatz der Vorrichtung wichtig, dass sie im Tiefwasserbereich eingesetzt wird. Zum Tiefwasserbereich zählen die Meeresgebiete, wo $d/\lambda > 0{,}5$ ist, wobei d die Wassertiefe ist.

Dies ergibt sich aus folgenden Tatbeständen: Die Wassermoleküle der Wellen bewegen sich annähernd auf Kreisbahnen, deren Radius überproportional mit dem Abstand (z) des Mittelpunktes des Kreises zum Meereswasserspiegel hin abnimmt.

Für den Radius der Orbitalbewegung gilt:
$r = r_1 \cdot e^{-2\pi \cdot z/\lambda}$, wenn $r_1$ = H/2 der Radius der Kreisbahn der Wassermoleküle bei z = 0 ist.

Da die kinetische Energie der Orbitalbewegung der Wassermoleküle darüber hinaus in einer quadratischen Beziehung zum Radius der Kreisbahn steht, ist die Reibung der Wassermoleküle am Meeresboden und damit der dadurch hervorgerufene Energieverlust bei einer Wassertiefe von etwa der halben Wellenlänge vernachlässigbar.

Aus diesen hier angegebenen Tatbeständen ergibt sich, dass zu einer effizienten Gewinnung von elektrischer Energie aus Meereswellenenergie die Vorrichtung dort positioniert sein muss, wo die Wellen große Wellenhöhen und lange Periodendauer haben und die Wassertiefe mindestens der halben Wellenlänge entspricht.

Diese Gegebenheiten findet man am besten in den Meeresbereichen von 40 bis 60 Grad nördlicher und südlicher Breite.

Als weitere Randbedingung für das Konzept einer Vorrichtung zur Energiegewinnung mit Wellenführungskanälen gilt, dass für die bestimmungsgemäße Führung der Wellen die Länge (1) der Wellenführungskanäle größer als die Wellenlänge $\lambda$ sein soll.

Sehr hohe Wellen bilden für schwimmende und befestigte Vorrichtungen dann eine Gefahr, wenn sie den Wellen eine große Angriffsfläche bieten. Dies hat schon wiederholt zu Beschädigungen und Zerstörungen derartiger Vorrichtungen geführt. Dieser Gefahr muss daher durch eine geeignete Konstruktion und Betriebweise begegnet werden.

Der Transport von elektrischer Energie über große Strecken mittels Seekabel ist nicht nur von den Investitionskosten her teuer, sondern bereitet auch Schwierigkeiten, die Erfordernisse für einen Anschluss einer schwimmenden Vorrichtung an ein Seekabel mit den Erfordernissen eines effizienten Betriebes hinsichtlich einer optimalen Positionierung der schwimmenden Vorrichtung zu vereinbaren.

Aus diesem Grund ist es sinnvoll, mit der auf der schwimmenden Vorrichtung gewonnenen elektrischen Energie mittels Elektrolyse Wasserstoff und Sauerstoff zu erzeugen und diese Stoffe unter hohem Druck oder in flüssiger Form in geeigneten Tanks bis zu ihrer Verschiffung zu lagern.

Aufgabe der Erfindung ist es, ein ökonomisch sinnvolles Verfahren zu schaffen, mit dem die Bewegungsenergie von Meereswellen zur Erzeugung von elektrischer Energie im großen Umfang genutzt werden kann und die Mängel bekannter Vorschläge und Ausführungsformen vermieden werden. Darüber hinaus ist es Gegenstand der Erfindung, eine schwimmende Vorrichtung anzugeben, mit der diese Aufgabe gelöst wird.

Ökonomisch sinnvolle schwimmende Vorrichtungen, die größtmögliche Leistung den Meereswellen entnehmen können, müssen vom Konzept her für den Einsatz im Meeresbereich fern der Küsten und für Gebiete großer Wassertiefen konzipiert sein.

Die Lösung der Aufgabe gemäß der Erfindung erfolgt mit den im Anspruch 1 angegebenen Merkmalen. Zweckmäßige Ausgestaltungen der Erfindung sind in den Unteransprüchen zu finden.

Es wird ein Verfahren und eine Vorrichtung angegeben, bei dem die Energie der Meereswellen mittels eines schwimmenden Wellenenergiekonverters in elektrische Energie umgeformt wird, der insbesondere für den Einsatz im Meeresbereich großer Tiefe konzipiert ist, wo es hohe Wellen mit großer Periodendauer gibt.

Hierzu ist der schwimmende Wellenenergiekonverter für die im Meeresbereich mit großer Tiefe gegebenen Verhältnisse ausgelegt. Insbesondere verfügt er über einen geeigneten Wellenführungskanal, der in die Tiefe reicht und Konstruktionsmerkmale aufweist, mit denen die auftretenden Kräfte beherrscht werden.

Der Gefahr einer Beschädigung oder Zerstörung des Wellenenergiekonverters durch extrem hohe Wellen wird unter anderem dadurch begegnet, dass die Aufbauten des Wellenenergiekonverters als Brückenkonstruktion ausgeführt sind. Die Aufbauten ruhen auf Pfeilern. Überschüssiges Wasser kann unter die Brückenbauten hindurchfließen und über die nicht allzu hohen Begrenzungswände am Ende der Speicherbecken hinwegspülen.

Darüber hinaus ist er mit einem Antriebssystem ausgestattet, mit dem er bezüglich der Laufrichtung der Wellen ausgerichtet werden kann und mit in ihrer Position veränderbaren Ankerplatten unterhalb des Wellenenergiekonverters, die sowohl die Funktion von Treibankern erfüllen als auch als Steuerungsinstrument für die Positionierung des Wellenenergiekonverters dienen. Diese Ankerplatten können aus einer horizontalen Lage in eine vertikale Lage geklappt werden und zur Unterstützung der Positionseinstellung des Wellenenergiekonverters um eine senkrechte Achse gedreht werden. Während ein längsseitiges Wegdriften des Wellenenergiekonverters durch die Ankerplatten verhindert wird, wird ein Wegdriften des Wellenenergiekonverters quer zur Längsachse durch die in die Tiefe reichenden Begrenzungswände der Wellenführungskanäle verhindert.

Für Meeresbereiche mit großer Wellenenergie, bei denen Ankermöglichkeiten bestehen, kann mittels einer in der Mitte des äußeren Wellenführungskanals vorhandenen Vorrichtung zur Führung einer Ankerkette und den an den äußeren Ecken des Wellenenergiekonverters befindlichen Ankerkettenwinden für das Ein- und Auslassen von Ankerketten der Wellenenergiekonverter geeignet positioniert werden.

Zur Wandlung der Meereswellenenergie in elektrische Energie werden die Meereswellen in tiefen, für die auftretenden mechanischen Belastungen geeigneten und sich stark verjüngenden Wellenführungskanälen geführt, wobei sich die Wellenamplitude aufgrund der kinetischen Energie der Wellen erhöht und Wasser über die Begrenzungswände dieser Wellenführungskanäle in Speicherbecken spült, die oberhalb des Meereswasserspiegels liegen.

Der schwimmende Wellenenergiekonverter ist mit speziellen Flut- und Lenzeinrichtungen ausgestattet, mit deren Hilfe die Höhe der Speicherbecken dem jeweiligen Energieaufkommen bei den Wasserwellen durch Anheben und Absenken bezogen auf den Meereswasserspiegel angepasst werden kann und auch ausgehend von einer waagerechten Lage des schwimmenden Wellenenergiekonverters dieser sowohl in Längs- als auch in Querrichtung verändert werden kann. Hierzu und für die Ausrichtung des Wellenenergiekonverters in Bezug auf die Laufrichtung der Wellen werden die notwendigen Informationen unter anderem von einem Wellenmanagement- und Positionierungssystem geliefert, das auch die Informationen von dem Befüllungszustand der Gasspeicher erhält und verarbeitet.

Mit dem Antriebssystem kann der Wellenenergiekonverter sich selbständig fortbewegen und kann bei extrem hohen Wellengang, bei dem der Betrieb eingestellt werden soll, um 180 Grad in eine sichere Position gedreht werden. Grundsätzlich kann der Wellenenergiekonverter aufgrund seiner Konstruktion auch bei hohem Wellengang sicher betrieben werden, da ja gerade für diesen Fall das Energieaufkommen besonders hoch ist.

Das Wasser der Speicherbecken gelangt zu einem Turbinen-Generatorsystem. Als Turbinen kommen Niederdruckturbinen, wie Kaplan- oder Rohrturbine, in Frage.

Die elektrische Energie wird dazu benutzt, auf elektrochemischem Wege Wasserstoff und Sauerstoff zu erzeugen. Diese Gase werden in Tanks gespeichert und in diesen anschließend zu einem vorgesehenen Ort transportiert oder die Gase werden zum Transport auf schwimmende Einrichtungen geleitet, die sich in unmittelbarer Nähe des Wellenenergiekonverters befinden. Bei landnahem Einsatz des Wellenenergiekonverters besteht selbstverständlich die Möglichkeit des Anschlusses an ein Seekabel.

Die Energieübertragung von elektrischer Energie auf Wasserstoff erfolgt mit einem Wirkungsgrad von etwa 70 %. Da bei diesem Prozess gleichzeitig auch Sauerstoff gewonnen wird, für den es auch einen immer größer werdenden Bedarf gibt, ist durch den zusätzlichen kommerziellen Gewinn durch den Sauerstoff die Energieausnutzung der elektrischen Energie bei diesem Prozess praktisch vollständig gegeben.

Die bei der Elektrolyse entstehende Prozesswärme wird mittels eines Luftzuführungs- und Luftabführungssystem abgeführt. Gegebenenfalls werden hierfür Wärmetauscher eingesetzt.

Einer groben Abschätzung zur Auslegung eines geeigneten Wellenenergiekonverters dienen folgende Überlegungen:

Unter Benutzung der Formel für den Radius des Kreises auf dem sich die Wassermoleküle bewegen und einer hier aufgestellten Festlegung, dass die Wassermoleküle erfasst werden sollen, deren kinetische Energie mindestens 3 % von der kinetischen Energie der Wassermoleküle bei $z = 0$ ist, lässt sich ausrechnen, dass die Wassertiefe des Wellenführungskanals mindestens $0,3 \lambda$ sein muss.

Die Wellenverhältnisse auf den Meeren sind etwa:

| Mittlere Werte | Nordsee | Nördlicher Atlantik | Ausgewähltes Gebiet |
|---|---|---|---|
| Wellenhöhe H | 1,5 m | 2,5 m | > 3,0 |
| Wellenperiode T | 6,4 s | 6,7 s | > 7,6 s |
| Wellenlänge λ | 64,4 m | 70,0 m | > 90,0 m |
| Wellenleistung P / b | 14,5 kW | 42,0 kW | > 68,7 kW |

Wird für eine ökonomische Auslegung des Wellenenergiekonverters eine Wellenlänge von $\lambda = 80$ m angenommen, so muss die Tiefe (t) des Wellenführungskanals $t = 0,3 \times 80$ m $= 24$ m sein. Selbstverständlich kann der Wellenenergiekonverter auch energiereichere Wellen mit größerer Wellenlänge verarbeiten, nur ist dann die Energieerfassung der Wellen nicht mehr auf die 3 % Grenze beschränkt, sondern liegt etwas darüber. Die Turbinenleistung erhöht sich dabei natürlich auf jeden Fall.

Für die Nutzbarmachung einer Wellenleistung von etwa 3,5 MW in einem Gebiet mit einer Wellenhöhe von etwa 3 m muss die Breite des Wellenführungskanals 50 m betragen. Für diese Leistung ist auch unter Berücksichtigung eines Wirkungsgrades für den Wellenenergiekonverter das Turbinen-Generatorsystem auszulegen.

Damit das Turbinen-Generatorsystem während des mit Wellenfrequenz anfallenden Wassers mit möglichst geringen Druckunterschieden arbeiten kann, müssen die Speicherbecken über ein hinreichend großes Speichervolumen und auch über eine große Oberfläche verfügen, damit die Pegelunterschiede der Speicherbecken während der Wellenperioden möglichst gering sind.

Legt man für die Tiefe der Speicherbecken 2 m fest, so ergeben sich für die Auslegung des Wellenenergiekonverters vernünftige Verhältnisse, wenn die Gesamtoberfläche F aller Speicherbecken gleich oder größer dem Produkt B x λ ist, wenn B die Breite des Wellenführungskanals an der Welleneinlaufstelle ist. Die Möglichkeit der Veränderung des Niveaus der Speicherbecken durch Fluten und Lenzen sollte etwa einen Hub von 4 m haben und eine weitere Reserve von etwa 2 m für Kippbewegungen in Längs- und Querrichtung, insbesondere für einen Gewichtsausgleich bei Veränderungen, die durch Veränderungen beim Ladegut hervorgerufen werden, insbesondere durch das Befüllen und Entladen der Gastanks.

Eine Anordnung mit mehreren Wellenführungskanälen bei einem schwimmenden Wellenenergiekonverter ist vorteilhaft, wenn mehr Energie durch Abschöpfung einer breiteren Wellenfront gewonnen werden soll und gleichzeitig die mechanischen Beanspruchungen der Wellenführungskanäle, insbesondere die Beanspruchung ihrer Gitterebenen mit den Gruppen von Versteifungselementen und Seilen oder Ketten, in vertretbaren Grenzen gehalten werden sollen. Die weiteren Merkmale dieses schwimmenden Wellenenergiekonverters mit drei Wellenführungskanälen sind analog denen des schwimmenden Wellenenergiekonverters mit nur einem Wellenführungskanal und sollen deshalb hier nicht noch einmal erläutert werden.

Zusammenfassend kann gesagt werden, dass die Erfindung erstmalig ermöglicht, dass große Mengen elektrischer Energie bei hohem Wirkungsgrad aus der Energie von Meereswellen gewonnen werden können. Aufgrund der konstruktiven und betriebstechnischen Auslegung des schwimmenden Wellenenergiekonverters kann er dort eingesetzt werden, wo die Bedingungen für die Gewinnung von elektrischer Energie aus Meereswellen am besten sind, nämlich im Bereich großer Meerestiefen im Bereich von 40 bis 60 Grad nördlicher und südlicher Breite. Der Transport der Energie erfolgt vorzugsweise durch den Transport von Wasserstoff, der auf dem Wellenenergiekonverter mit hohem Wirkungsgrad mittels Elektrolyse gewonnen wird. Da der Wasserstoff weltweit in immer größerem Umfang benötigt wird, braucht er auch nicht an Land in elektrische Energie rückgewandelt zu werden. Da bei der Elektrolyse gleichzeitig Sauerstoff anfällt, der ebenfalls in immer größerem Umfang benötigt wird, ergibt sich auch dadurch ein erheblicher kommerzieller Vorteil für diese Verfahrensweise der Energiegewinnung.

Nachfolgend soll die Erfindung im Zusammenhang mit den Zeichnungen im wesentlichen anhand eines Ausführungsbeispiels eines Wellenenergiekonverters mit einem Wellenführungskanal näher erläutert werden und als Beispiel einer Ausführungsform mit mehreren Wellenführungskanälen ein Wellenenergiekonverter mit drei Wellenführungskanälen und einem gemeinsamen Speicherbecken in einer weitem Zeichnung angegeben und beschrieben werden.

Es zeigen:

FIG. 1 Ein schwimmender Wellenenergiekonverter 1 in der Draufsicht, der über einen Wellenführungskanal 2 und ein Speicherbecken 3 verfügt. Dargestellt sind ferner ein Längsschnitt A - A, ein Querschnitt B-B durch den Wellenführungskanal 2, ein Querschnitt C - C im mittleren Bereich und die beiden seitlichen Ansichten des Wellenenergiekonverters 1 in den FIG. 1.1 und FIG. 1.2.

FIG. 2 Die Draufsicht auf den schwimmenden Wellenenergiekonverter 1 mit einem Schnitt C-C zur Darstellung der Kammern 23 und Tanks 24 für das Anheben und Absenken des schwimmenden Wellenenergiekonverters 1 bezogen auf den Meereswasserspiegel.

FIG. 3 Einen vergrößerten Ausschnitt aus FIG. 2 aus den Bereichen der Kammern 23 und Tanks 24 für das Fluten und Lenzen mit den zugehörigen Pumpen 29 und Ventilen 30.

FIG. 4 Die Draufsicht auf den schwimmenden Wellenenergiekonverter 1 mit einem Schnitt C-C zur Darstellung der Akkumulatoren 31 für die Speicherung der elektrischen Energie, den Geräten für die Elektrolyse 32 und einer Anordnung von Gastanks 33.

FIG. 5 Eine Vergrößerung von FIG. 1.1 unter besonderer Hervorhebung der Brückenkonstruktion der Aufbauten und der Überspülmöglichkeit von überschüssigem Wasser.

FIG. 6 Die Draufsicht auf einen schwimmenden Wellenenergiekonverter 1 mit drei Wellenführungskanälen 2 und einem gemeinsamen Speicherbecken 3.

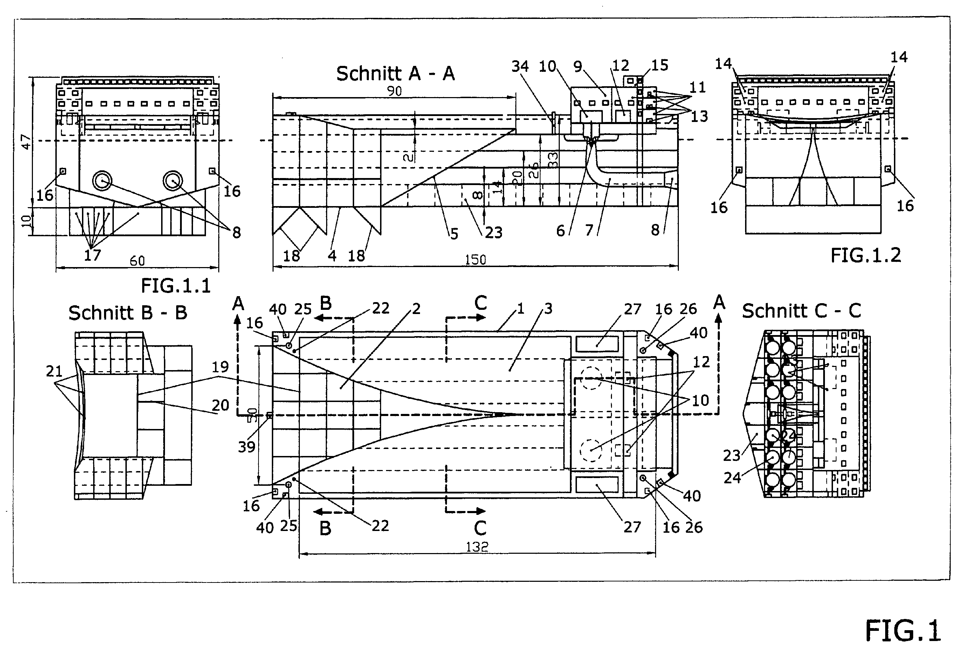

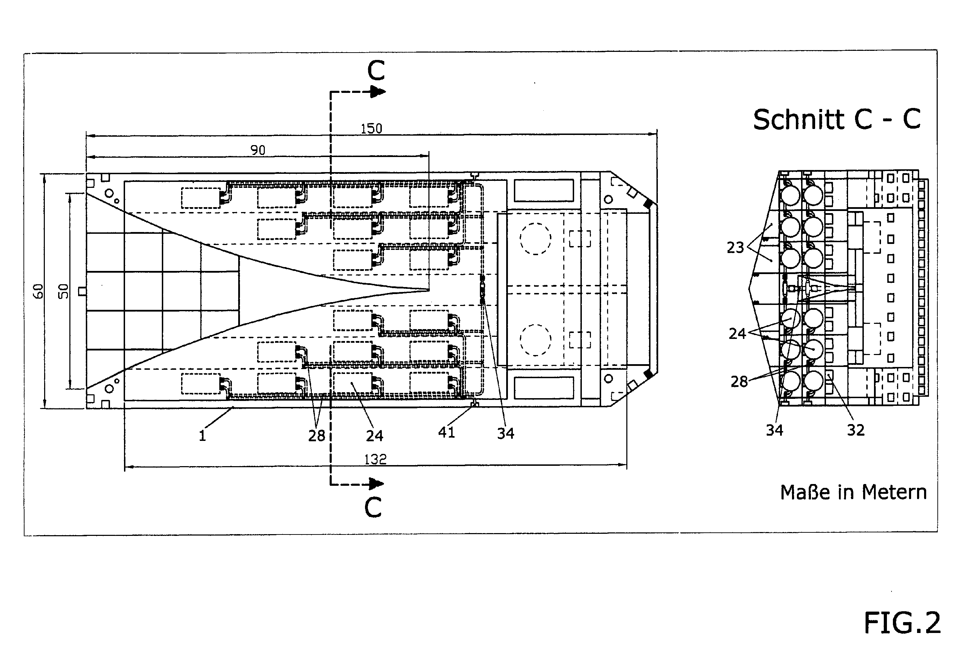

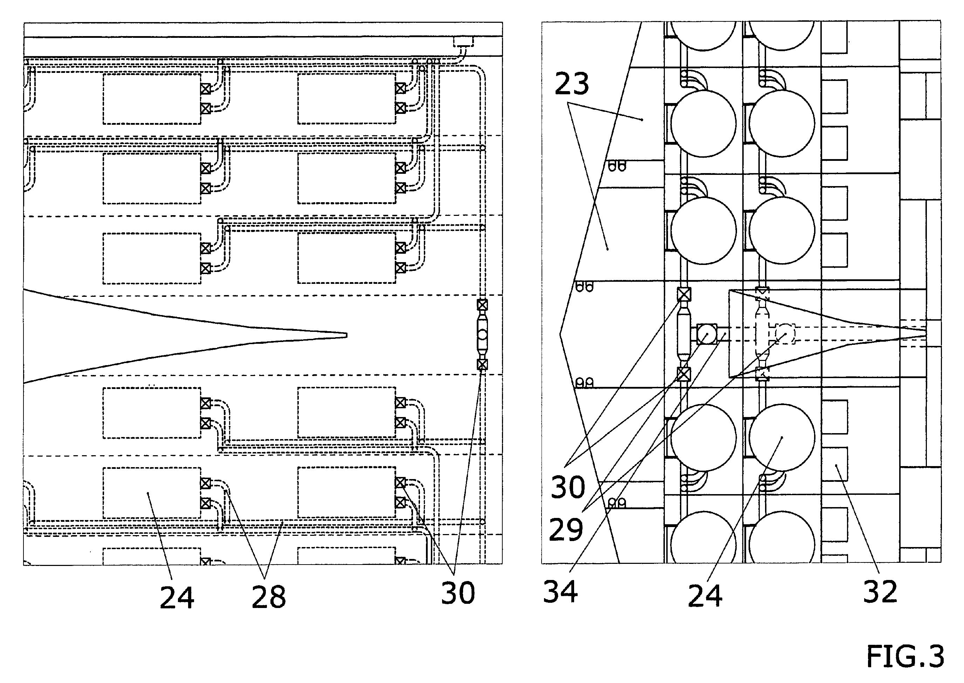

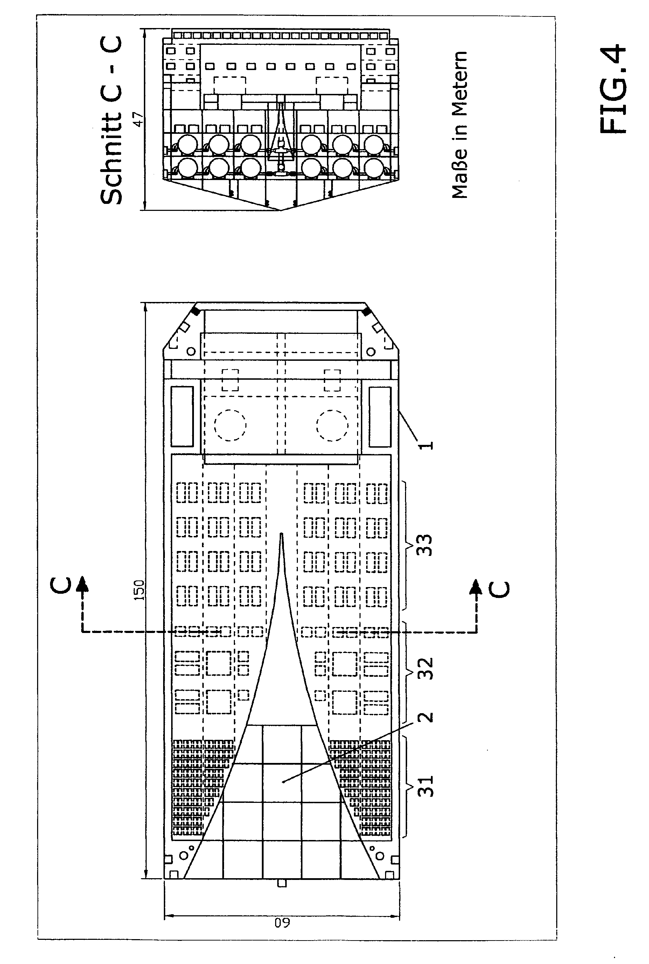

FIG. 1 gibt einen Überblick über einen schwimmenden Wellenenergiekonverter 1 mit einem Wellenführungskanal 2 und einem Speicherbecken 3. Der Wellenführungskanal 2 hat von der Einlassseite her einen zunächst horizontal verlaufenden äußeren Wellenführungskanalboden 4 und anschließend einen ansteigenden inneren Wellenführungskanalboden 5. Am Ende des Speicherbeckens 3 sind zwei Turbinen 6 mit ihren Auslassrohren 7 und den Austrittsöffnungen 8 sowie die über den Turbinen 6 in einem Generatorraum 9 befindlichen Generatoren 10 dargestellt. In den Anlagenräumen 11 befinden sich die für die Aufbereitung der elektrischen Energie benötigten Baugruppen, wie z.B. Transformatoren 12, Gleichrichter, Umformer und Steuergeräte 13. Die Räume 14 sind Mehrzweckräume, z.B. auch Unterkunftsräume für eine Besatzung und der Raum 15 ist die Brücke des schwimmenden Wellenenergiekonverters. Hier sind alle Geräte für Fortbewegung, Navigation, Ortung, und operativem Einsatz zur Gewinnung der elektrischen Energie aus Wellenenergie untergebracht, wie auch das Wellenmanagement- und Positionierungssystem. An den vier äußeren Ecken des schwimmenden Wellenenergiekonverters befindet sich jeweils ein Antrieb 16 und die seitlichen Ankerkettenwinden 40. Eine weitere Ankervorrichtung 39 befindet sich in der Mitte des Wellenführungskanals 2. Fig. 1.1 zeigt Ankerplatten 17 unterschiedlicher Breite, die hintereinander unterhalb des sich verjüngenden Wellenführungskanals 2 angebracht sind und die mittels eines Klappmechanismus 18 in die horizontale Lage geklappt werden können, wie das im Schnitt A - A von Fig. 1 dargestellt ist. Oberhalb des Bodens des Wellenführungskanals 2 befindet sich zur Erhöhung der Stabilität desselben in einem hierfür hinreichendem Abstand eine erste Gruppe von Versteifungselementen 119 in Form einer Gitterebene, die mit einer zweiten Gruppe von Versteifungselementen II 20 mit dem äußeren Wellenführungskanalboden 4 verbunden ist. Eine zweite Gitterebene (Versteifungselemente III) am oberen Ende des Wellenführungskanals 2, die ebenfalls der Stabilität des Wellenführungskanals 2 dient, ist in diesem Ausführungsbeispiel durch parallel angeordnete Seile oder Ketten 21 ersetzt. Im Grundriss und im Schnitt A - A sind Entlüftungsrohre 22 für die Kammern 23 und Tanks 24 dargestellt, die für das Fluten und Lenzen des schwimmenden Wellenenergiekonverters 1 benötigt werden. Die Ansaugrohre 25 für die Luft zur Abführung der bei der Elektrolyse entstehenden Prozesswärme befinden sich in der Nähe der Entlüftungsrohre 22 der Kammern 23 und Tanks 24, wohingegen sich die Auslassrohre 26 für diese Luft am anderen Ende des Wellenenergiekonverters 1 befinden. Fig. 1 zeigt auch die Ladeluken 27 für das Beladen und Entladen der Gastanks 33, die in FIG. 4 dargestellt sind. Diese abdeckbaren Öffnungen sind auch die Zugangsöffnungen für die auf den verschiedenen Ebenen des schwimmenden Wellenenergiekonverters 1 untergebrachten Geräte. Im Schnitt A - A sind beispielhaft vier Ebenen dargestellt, die sich unter dem Speicherbecken 3 befinden. In der untersten Ebene befinden sich die Kammern 23 samt Rohrleitungssystem 28 mit Pumpen 29 und Ventilen 30, wie es in FIG. 2 und FIG. 3 verdeutlicht ist. Diese Kammern 23 sind auch im Schnitt C - C zu erkennen. In den beiden darüber befindlichen Ebenen sind die Tanks 24 als eine Alternative zu den Kammern 23 mit zugehörigem Rohrleitungssystem 28 und Pumpen 29 und Ventilen gezeigt. In der darüber befindlichen vierten Ebene befinden sich die Akkumulatoren 31 für die Speicherung der elektrischen Energie sowie alle Geräte für die Elektrolyse 32 und die Speicherung von Wasserstoff und Sauerstoff in geeigneten Gastanks 33. Dies ist im Schnitt C - C dargestellt und in den Zeichnungen FIG. 2, FIG. 3 und FIG. 4 noch mehr verdeutlicht.

FIG. 2 zeigt in der Draufsicht eine der beiden Ebenen für die Tanks 24. Im Schnitt C - C sind darüber hinaus auch die Kammern 23, die sich im unteren Teil des schwimmenden Wellenenergiekonverters 1 befinden, dargestellt. Das in die Kammern 23 und Tanks 24 fließende Wasser gelangt über Wassereinlauffilter 41 in das Rohrleitungssystem 28. Beim Lenzen wird das Wasser über eine Rohrverbindung 34 zum Speicherbecken 3 gepumpt oder direkt ins Meer.

FIG. 3 zeigt Ausschnitte aus FIG. 2. zur Verdeutlichung der einzelnen Anordnungen. Hier sind neben den Kammern 23, den Tanks 24 und das Rohrleitungssystem 28 auch die Pumpen 29 und die Ventile 30 sowie die Rohrverbindung 34 für das Hochpumpen des Lenzwassers zum Speicherbecken 3 verdeutlicht. Ebenso ist eine Gruppe von Geräten für die Elektrolyse 32 gezeigt.

FIG. 4 zeigt im Grundriss die vierte Ebene des schwimmenden Wellenenergiekonverters 1 und einen Schnitt C - C durch seinen mittleren Teil. Zu beiden Seiten des Wellenführungskanals 2 befinden sich die Akkumulatoren 31 für die Speicherung der elektrischen Energie. Daneben befinden sich im mittleren Bereich unterschiedliche Geräte für die Elektrolyse 32 des Wassers. Rechts daneben befinden sich die Gastanks 33 für die Speicherung von Wasserstoff und Sauerstoff.

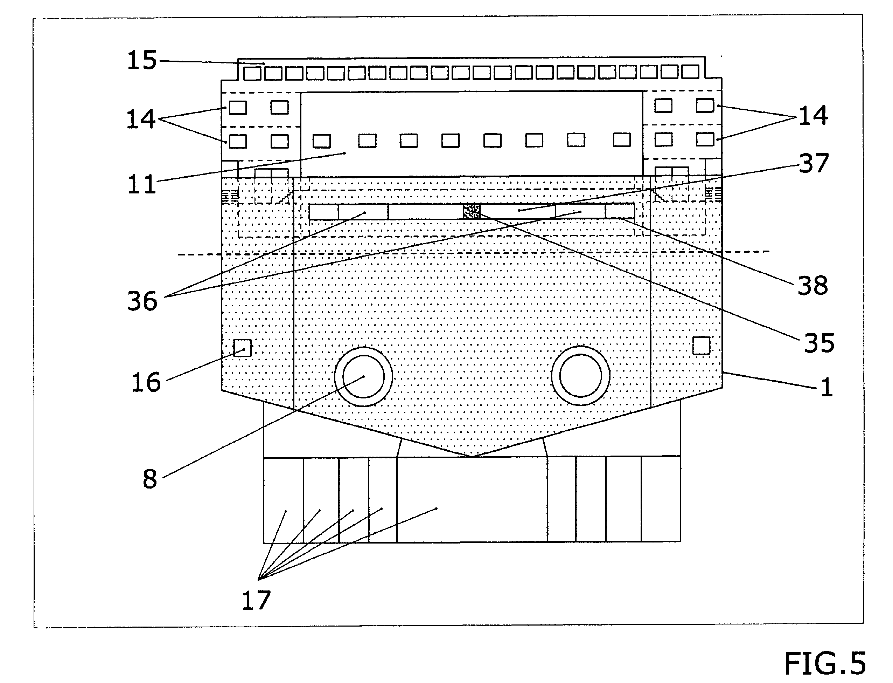

FIG. 5 zeigt den durch Schattierung hervorgehobenen mittleren Brückenpfeiler 35 als tragendes Element für die Brückenkonstruktion der Aufbauten. Die beiden äußeren Pfeiler sind auf dieser Zeichnung von der Außenwand des schwimmenden Wellenenergiekonverters 1 verdeckt. Das Speicherbecken 3 befindet sich zum Teil unter den Aufbauten. In den Räumen unmittelbar über dem Speicherbecken 3 sind die Generatoren 10 und Transformatoren 12 untergebracht. In dem hier gezeigten Bereich der Anlagenräume 11 sind die Baugruppen für die Aufbereitung der elektrischen Energie und die Steuergeräte 13 untergebracht. An den beiden Seiten der Aufbauten befinden sich Mehrzweckräume 14 und ganz oben befindet sich die Brücke 15 als Steuerungszentrale des schwimmenden Wellenenergiekonverters 1. Links und rechts neben dem mittleren Brückenpfeiler 35 sind die beiden Generatorschächte 36 zu sehen. Unterhalb des äußeren Wellenführmgskanalbodens 4 befinden sich die Ankerplatten 17.

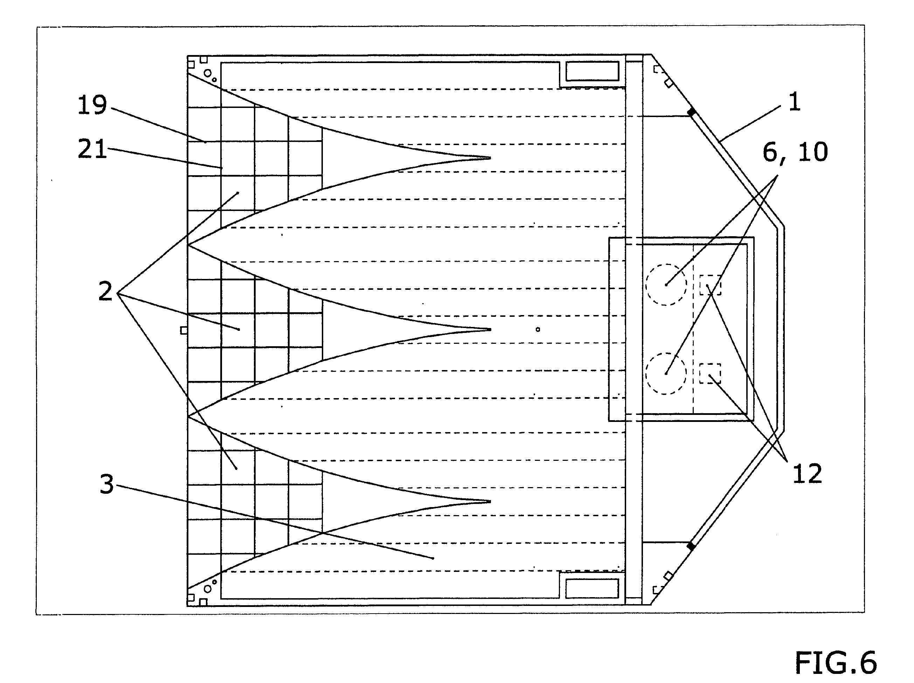

Fig. 6 zeigt einen schwimmenden Wellenenergiekonverter 1 mit drei Wellenführungskanälen 2, einem gemeinsamen Speicherbecken 3, zwei Turbinen 6 und zwei Generatoren 10 und die Transformatoren 12.

## Patentansprüche

1. Schwimmender Wellenenergiekonverter mit mindestens einem sich verjüngenden Wellenführungskanal, mindestens einem Speicherbecken, mindestens einem Turbinen-Generatorsystem, mit Kammern oder Tanks für das Fluten und Lenzen, **dadurch gekennzeichnet, dass** ein Antriebssystem (16) vorhanden ist und die Positionierung des schwimmenden Wellenenergiekonverters (1) nach Richtung, Höhe und Lage durch ein Wellenmanagement- und Positionierungssystem erfolgt, dass spezielle, für den Tiefseebereich vorgesehene Wellenführungskanäle (2) vorgesehen sind, dass Aufbauten zur Unterbringung von Menschen und Geräten vorhanden sind, die sich vorzugsweise als Brückenaufbauten mit schmaler Tragkonstruktion über den Speicherbecken befinden, dass Vorrichtungen zur Umformung der gewonnenen elektrischen Energie mittels Elektrolyse in Wasserstoff und Sauerstoff und Gastanks (33) für die Speicherung der Gase vorgesehen sind, dass Ankerplatten (17) im unteren äußeren Bereich angebracht sind und die Kammern (23) und / oder Tanks (24) für das Fluten und Lenzen jeweils mit Einlass- und Auslassventilen (30) versehen sind.

2. Schwimmender Wellenenergiekonverter (1) nach Anspruch 1, **dadurch gekennzeichnet, dass** das Wellenmanagement- und Positionierungssystem die Wellenrichtung, die Wellenhöhe, die Periodendauer oder Wellenlänge der Meereswellen ermittelt, die Leistung der Meereswellen berechnet und unter Berücksichtigung der Wasserstände der Speicherbecken (3), der Füllungszustände der Wasserstoff- und Sauerstofftanks (33) und der gewünschten Generatorleistung die Positionierung des schwimmenden Wellenenergiekonverters (1) nach Richtung in Bezug zur Wellenrichtung, nach Höhe in Bezug zum Meereswasserspiegel und nach Lage seiner Längs- und Querachse in Bezug zu der waagerechten Lage mittels seines Antriebssystems bzw. durch gesteuertes Fluten oder Lenzen der einzelnen Kammern (23) und / oder Tanks (24) vornimmt.

3. Schwimmender Wellenenergiekonverter (1) nach den Ansprüchen 1 bis 2, **dadurch gekennzeichnet, dass** die den Kammern (23) und / oder Tanks (24) jeweils zugeordneten Ventile (30) von dem Wellenmanagement- und Positionierungssystem individuell angesteuert werden können.

4. Schwimmender Wellenenergiekonverter (1) nach Anspruch 1, **dadurch gekennzeichnet, dass** die speziellen, für den Tiefseebereich vorgesehene Wellenführungskanäle (2) über Längen nicht wesentlich kleiner als $\lambda$ verfügen und deren Tiefe am Welleneinlauf nicht wesentlich kleiner als 0,2 $\lambda$ sind und die Gesamtfläche der Speicherbecken (3) nicht wesentlich kleiner als B x $\lambda$ ist, wenn B die Breite des Wellenführungskanals (2) an seinem äußeren Ende ist.

**5.** Schwimmender Wellenenergiekonverter (1) nach Anspruch 1, **dadurch gekennzeichnet, dass** eine erste Gruppe von Versteifungselementen I (19) die Seitenwände der Wellenführungskanäle (2) oberhalb ihrer Wellenführungskanalböden (4, 5) verbindet und die Versteifungselemente I (19) auch untereinander verbunden sind.

**6.** Schwimmender Wellenenergiekonverter (1) nach Anspruch 5, **dadurch gekennzeichnet, dass** die Wellenführungskanäle eine zweite Gruppe von Versteifungselementen II (20) besitzen, die die erste Gruppe von Versteifungselementen I (19) mit den Wellenführungskanalböden (4, 5) der Wellenführungskanäle (2) verbindet.

**7.** Schwimmender Wellenenergiekonverter (1) nach den Ansprüchen 5 bis 6, **dadurch gekennzeichnet, dass** die oberen Enden der Seitenwände der Wellenführungskanäle (2) mittels einer weiteren Gruppe von Versteifungselementen III miteinander verbunden sind, die ihrerseits wahlweise untereinander verbunden sind.

**8.** Schwimmender Wellenenergiekonverter (1) nach den Ansprüchen 5 bis 7, **dadurch gekennzeichnet, dass** es sich bei den Versteifungselementen 1 (19), den Versteifungselementen II (20) und der weiteren Gruppe von Versteifungselementen III insbesondere um Bleche, Stäbe und Rohre handelt.

**9.** Schwimmender Wellenenergiekonverter (1) nach Anspruch 1, **dadurch gekennzeichnet, dass** die oberen Enden der Seitenwände der Wellenführungskanäle (2) mittels parallel verlaufenden und mit Abstand zueinander angeordneten Seilen oder Ketten (21) miteinander verbunden sind.

**10.** Schwimmender Wellenenergiekonverter (1) nach Anspruch 1, **dadurch gekennzeichnet, dass** die unterhalb des schwimmenden Wellenenergiekonverters (1) befindlichen Ankerplatten (17) senkrecht und quer zur Längsachse des schwimmenden Wellenenergiekonverters (1) angebracht sind, die wahlweise um eine senkrechte Achse drehbar sind und darüber hinaus wahlweise aus einer senkrechten Lage in die horizontale Lage geklappt werden können.

Schnitt A - A

FIG.1.1

FIG.1.2

Schnitt B - B

Schnitt C - C

FIG.1

EP 1 890 032 A2

Schnitt C - C

Maße in Metern

FIG.2

EP 1 890 032 A2

FIG.3

Schnitt C - C

Maße in Metern

FIG.4

FIG.5

EP 1 890 032 A2

FIG.6

**IN DER BESCHREIBUNG AUFGEFÜHRTE DOKUMENTE**

**In der Beschreibung aufgeführte Patentdokumente**

- DE 2857156 A1
- DE 3803570 C2